# EUROPÄISCHE PATENTANMELDUNG

(11) **EP 1 746 524 A1**
(43) Veröffentlichungstag der Anmeldung: **24.01.2007**
(21) Anmeldenummer: 05016015.9
(22) Anmeldetag: 22.07.2005
(51) Int. Cl.: G06F 21/00

(54) **Verfahren zum Erstellen einer verschlüsselten Sicherungsdatei und Verfahren zum Wiederherstellen von Daten aus dieser Sicherungsdatei bei einem Pocket-PC**

(71) Anmelder: Fujitsu Siemens Computers GmbH, 80807 München (DE)
(72) Erfinder: Müller, Stephan, 86199 Augsburg (DE); Filimon, Diana, 86368 Gersthofen (DE)
(74) Vertreter: Epping - Hermann - Fischer

(57) **Zusammenfassung**

Bei den erfindungsgemäßen Verfahren zum Erstellen einer verschlüsselten Sicherungsdatei (SD) bei einem Pocket-PC sowie zum Wiederherstellen von Daten aus einer verschlüsselten Sicherungsdatei (SD) bei einem Pocket-PC, wird zum Ver-/Entschlüsseln der Sicherungsdatei (SD) ein im BIOS und/oder Betriebssystem des Pocket-PCs abgelegtes Passwort (P) eingesetzt. Die für den Benutzer umständliche Schlüsseleingabe beim Erstellen und Wiederherstellen der Sicherungsdatei (SD) kann so durch die Benutzung des z.B. im Zusammenhang mit einem Zugangsschutz sowieso vorhandenen Passwortes (P) als Schlüssel (S) entfallen, ohne dass auf die Vorteile einer verschlüsselten Sicherungsdatei (SD) verzichtet werden muss.

## Beschreibung

Die Erfindung betrifft ein Verfahren zum Erstellen einer verschlüsselten Sicherungsdatei bei einem Pocket-PC sowie ein Verfahren zum Wiederherstellen von Daten aus einer verschlüsselten Sicherungsdatei bei einem Pocket-PC. Die Erfindung betrifft weiterhin einen Pocket-PC, der zur Durchführung der Verfahren geeignet ist.

Als Pocket-PC werden tragbare Computer bezeichnet, die bequem in einer Hand gehalten werden können. Alternativ sind auch die Bezeichnung Handhelds oder Organizer üblich. Mobiltelefone mit Funktionen, die über das Telefonieren und das Verschicken von Kurzmeldungen hinaus gehen und die häufig Smart-Phones genannt werden, gehören ebenfalls zu dieser Gruppe. Ihnen ist gemeinsam, dass sie deutlich kleiner als andere tragbare Computer wie zum Beispiel Laptops oder Notebooks sind. Anwendungsprogramme aus den Bereichen Adress- und Terminverwaltung, Textverarbeitung oder Datenpräsentation sind in Versionen mit leicht reduzierter Leistungsfähigkeit häufig auch für Pocket-PCs verfügbar.

Pocket-PCs weisen üblicherweise einen flüchtigen Speicherbereich und ein nichtflüchtiges Speichermedium auf. Im Gegensatz zu Desktop-Computern oder größeren tragbaren Computern (Notebooks, Laptops) werden Pocket-PCs beim normalen Gebrauch im täglichen Betrieb zum Abschalten nicht komplett stromlos geschaltet, sondern lediglich in einen Stand-by Modus versetzt. In diesem Stand-by Modus bleibt der flüchtige Speicher, der zum Einen als Arbeitsspeicher fungiert und in dem sich zum Anderen üblicherweise alle Anwenderdaten befinden, bestromt und sein Inhalt somit erhalten. Diese Betriebsweise ist für den Anwender vorteilhaft, da der Pocket-PC aus dem Stand-by Modus deutlich schneller wieder betriebsbereit ist, als wenn zunächst Daten aus dem nichtflüchtigen Speichermedium in den flüchtigen Speicher geladen werden müssten. Durch den Einsatz flüchtiger Speicher mit geringer Stromaufnahme, zum Beispiel in C-MOS-Technologie ist diese Betriebsweise im Allgemeinen auch mit einer ausreichenden Batterielaufzeit vereinbar.

Neben dem Stand-by Modus besteht weiterhin die Möglichkeit, den Pocket-PC komplett, den flüchtigen Speicher eingeschlossen, stromlos zu schalten. Dieses bietet sich beispielsweise an, wenn der Pocket-PC für einen längeren Zeitraum nicht genutzt wird. Weiterhin ist typischerweise vorgesehen, dass der Pocket-PC diesen Zustand automatisch einnimmt, wenn der Batterieladezustand so kritisch wird, dass selbst eine Stand-by Betrieb nicht aufrecht gehalten werden kann. Falls, absichtlich oder unbeabsichtigt, der Pocket-PC auf diese Weise komplett abgeschaltet wurde, ist zur Wiederaufnahme des Betriebs ein Systemneustart, häufig als Kaltstart bezeichnet, notwendig. In diesem Fall werden nacheinander das BIOS (Basic Input Output System) und das Betriebssystem des Pocket-PC neu gestartet, wobei bekannt ist, dass entweder BIOS oder Betriebssystem oder beide einen Zugangsschutz zum Schutz gegen unberechtigte Benutzung des Pocket-PCs bereitstellen. Häufig geschieht dies in Form einer Passwortabfrage.

Zum Schutz vor Datenverlust sehen Pocket-PCs meist die Möglichkeit vor, relevante Inhalte des flüchtigen Speichers in einer Sicherungsdatei zusammenzufassen und diese Sicherungsdatei auf das nichtflüchtige Speichermedium, häufig eine auswechselbare Speicherkarte in Flash-Technologie, des Pocket-PCs abzulegen. Nach einem Abschalten des Pocket-PCs in den komplett stromlosen Zustand und dem danach notwendigen Neustart von BIOS und Betriebssystem, samt der unter Umständen erforderlichen Eingabe eines Passworts, kann der Inhalt des flüchtigen Speichers aus der Sicherungsdatei wieder hergestellt werden. Zum Schutz der in der Sicherungsdatei enthaltenen Daten, zum Beispiel bei einem Diebstahl oder der Weitergabe des Pocket-PCs oder des auswechselbaren nichtflüchtigen Speichermediums, ist typischerweise die Möglichkeit gegeben, die Sicherungsdatei zu verschlüsseln. Zu diesem Zweck wird bei der Erstellung der Sicherungsdatei ein Schlüssel vom Benutzer angegeben, dessen korrekte Eingabe zur Wiederherstellung der Daten der Sicherungsdatei Voraussetzung ist.

In der Praxis zeigt sich, dass Benutzer von dieser Möglichkeit eher selten Gebrauch machen, da die Eingabe eines Schlüssels als lästig empfunden wird. Weiterhin scheint das Risiko eines möglichen Schadens durch Vergessen des eingegebenen Schlüssels höher bewertet zu werden als das Risiko, dass nicht verschlüsselte Sicherungsdateien unberechtigt gelesen werden könnten.

Es ist daher eine Aufgabe der vorliegenden Erfindung, Verfahren zum Erstellen einer verschlüsselten Sicherungsdatei bei einem Pocket-PC und zum Wiederherstellen der Inhalte der Sicherungsdatei anzugeben, bei dem der Benutzer von der Eingabe eines Schlüssels befreit ist, die gesicherten Daten in der Sicherungsdatei aber dennoch vor unberechtigtem Zugriff geschützt sind. Es ist eine weitere Aufgabe der Erfindung, einen Pocket-PC anzugeben, der zur Durchführung der Verfahren geeignet ist.

Diese Aufgabe wird erfindungsgemäß gelöst durch ein Verfahren zum Erstellen einer verschlüsselten Sicherungsdatei gemäß Anspruch 1 und ein Verfahren zum Wiederherstellen von Daten aus einer verschlüsselten Sicherungsdatei gemäß Anspruch 2 sowie durch einen Pocket-PC gemäß Patentanspruch 7.

Bei den erfindungsgemäßem Verfahren, beziehungsweise dem erfindungsgemäßen Pocket-PC, wird zum Ver-/Entschlüsseln der Sicherungsdatei ein im BIOS und/oder Betriebssystem des Pocket-PCs abgelegtes Passwort eingesetzt. Die Erfindung nutzt somit aus, dass bei Pocket-PCs für bestimmte Zwecke, beispielsweise für einen im BIOS oder im Betriebssystem implementierten Zugangsschutz, ein Passwort hinterlegt ist. Dieses Passwort, oder ein Teil davon, wird erfindungsgemäß als Schlüssel zum Ver-/Entschlüsseln der Sicherungsdatei eingesetzt. Die umständliche Schlüsseleingabe kann somit entfallen, ohne dass auf die Vorteile einer verschlüsselten Sicherungsdatei verzichtet werden muss. Dadurch kann beispielsweise auch eine automatische Erstellung der Sicherungsdatei, beispielsweise in regelmäßigen Abständen, erfolgen, da keine Interaktionen mit dem Benutzer notwendig ist.

Häufig weisen die im Zusammenhang mit dem Zugangsschutz benutzten Passwörter eines Pocket-PCs sowohl geräteabhängige als auch vom Benutzer abänderbare, geräteunabhängige Teile auf. Vorteilhafterweise können entweder beide Anteile zur Verschlüsselung der Sicherungsdatei eingesetzt werden, wodurch die Sicherungsdatei nur auf dem Gerät, auf dem sie erstellt wurde wieder hergesellt werden kann, oder es wird nur der geräteunabhängige Teil zur Verschlüsselung eingesetzt, wodurch eine Wiederherstellung von Daten aus der Sicherungsdatei auch auf einem anderen Gerät möglich wird.

In einer bevorzugten Ausführung des Verfahrens zum Wiederherstellen von Daten wird der Benutzer zur Eingabe eines Schlüssels aufgefordert, falls das Passwort oder wenn vorhanden der geräteunabhängige Teil des Passworts, zur Entschlüsselung der Sicherungsdatei nicht geeignet ist. In dem Fall wird der vom Benutzer eingegebene Schlüssel zur Entschlüsselung der Sicherungsdatei benutzt.

Weitere vorteilhafte Ausgestaltungen und Weiterbildung der Erfindung sind Gegenstand der abhängigen Ansprüche.

Im Folgenden wird die Erfindung anhand eines Ausführungsbeispiels mit Hilfe von zwei Figuren näher erläutert.

Es zeigt:
Figur 1 das Flussdiagramm eines Ausführungsbeispiels des erfindungsgemäßen Verfahrens zum Erstellen einer Sicherungsdatei bei einem Pocket-PC und
Figur 2 das Flussdiagramm eines Ausführungsbeispiels des erfindungsgemäßen Verfahrens zum Entschlüsseln einer verschlüsselten Sicherungsdatei bei einem Pocket-PC.

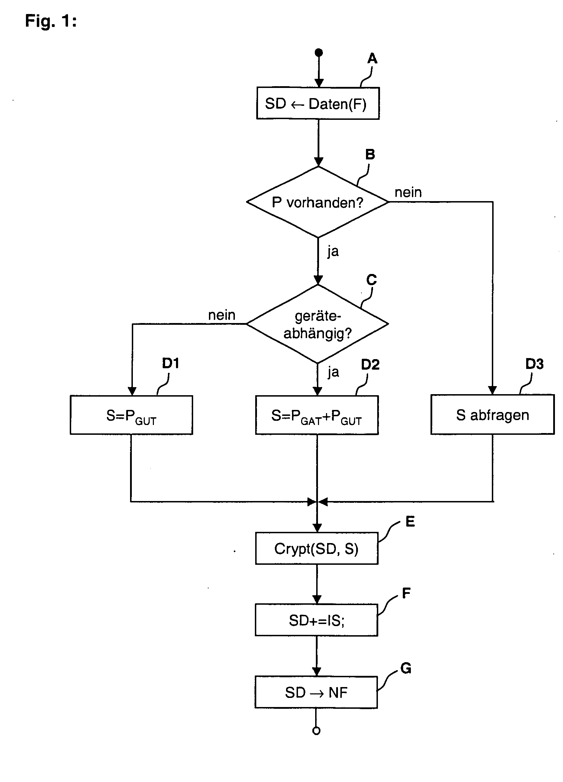

Das in Figur 1 gezeigte Verfahren zum Erstellen einer verschlüsselten Sicherungsdatei für einen Pocket-PC startet mit dem einleitenden Schritt A, in dem die relevanten, zu sichernden Daten eines flüchtigen Speichers F eines Pocket-PCs als Sicherungsdatei SD zusammengestellt werden. Auswahlverfahren und -kriterien, nach denen dieses geschehen kann, sind bekannt und werden hier nicht weiter ausgeführt. Auch ist für das erfindungsgemäße Verfahren nicht relevant, welches Datenformat für die Sicherungsdatei SD eingesetzt wird und ob gegebenenfalls eine Kompression der Daten nach der Zusammenstellung erfolgt.

In Schritt B des Verfahrens wird erfragt, ob ein Passwort P, das zur Verschlüsselung der Sicherungsdatei SD eingesetzt werden könnte, auf dem Gerät überhaupt vorhanden ist. Im Rahmen der Erfindung kann prinzipiell jedes Passwort P, das innerhalb des Pocket-PCs in einem nichtflüchtigen Speicherbereich hinterlegt ist, zu diesem Zweck eingesetzt werden. Es kann sich dabei z.B. um ein Passwort handeln, das vom BIOS benutzt wird und das in einem nichtflüchtigen und üblicherweise nicht entfernbaren Speicher des Pocket-PCs abgelegt ist. Alternativ könnte auch ein Passwort des Betriebssystems eingesetzt werden, das dann allerdings häufig auf einem nichtflüchtigen, aber auswechselbaren Speichermedium NF, das auch zur Speicherung der Sicherungsdatei SD eingesetzt wird, gespeichert ist. In diesem Fall ist zwar eine Benutzer- nicht aber eine Gerätebindung der Sicherungsdatei möglich. Welches Passwort eingesetzt wird, ist für das erfindungsgemäße Verfahren prinzipiell unerheblich, im Rahmen einer Implementierung des Verfahrens ist jedoch ein zu benutzendes Passwort eindeutig festzulegen. Im gezeigten Ausführungsbeispiels soll dieses das Passwort des vom BIOS bereitgestellten Zugangsschutzes sein. Dieses wird häufig auch als Systempasswort bezeichnet.

In Schritt B kann nicht nur eine Abfrage erfolgen, ob das vereinbarte Passwort P vorhanden ist, sondern auch, ob seine Benutzung gewünscht ist. Wenn eine dieser beiden Abfragen verneint wird, verzweigt das Verfahren zum Schritt D3. Ist dagegen das vereinbarte Passwort P vorhanden und seine Benutzung erwünscht, verzweigt das Verfahren zum Schritt C. Die Einstellung, ob eine Benutzung eines vereinbarten Passwortes gewünscht ist oder nicht, kann z.B. in einer Konfigurationsdatei vorgenommen werden, so dass die Abfrage dieser Einstellung keine Interaktion mit dem Benutzer zur Folge hat. Auch ist denkbar, dass in einem Dialogfenster während des Erstellens der Sicherungsdatei SD ein Feld zur optionalen Schlüsseleingabe bereitgestellt wird. Wird das Feld nicht ausgefüllt, wird das Passwort P, falls vorhanden, benutzt (Verzweigung zu Schritt C), wird ein Schlüssel eingegeben, wird dieser benutzt (Verzweigung zu Schritt D3).

Das beispielhaft gewählte Systempasswort P besteht aus einem geräteabhängigen Anteil P_{GAT} und aus einem geräteunabhängigen Teil P_{GUT}. Der geräteabhängige Teil P_{GAT} ist fest verdrahtet vorgegeben und führt die benutzte Hardware des Gerätes eindeutig. Der geräteunabhängige Teil P_{GUT} kann vom Benutzer frei gewählt werden. Nur dieser Teil P_{GUT} braucht zur Entsperrung des Zugangsschutzes vom Benutzer eingegeben zu werden. Der geräteabhängige Teil P_{GAT} wird vom BIOS automatisch und transparent hinzugefügt und unterbindet so den Zugang zum Gerät durch mögliche Hardwaremanipulationen. Bei Abfragen, die nicht dieser Sicherheitseinschränkung unterliegen sollen, kann der geräteabhängige Teil P_{GAT} des Systempassworts P auch unberücksichtigt bleiben. Diese beiden alternativen Möglichkeiten sind auch im Ausführungsbeispiel von Figur 1 für die Verschlüsselung der Sicherungsdatei SD möglich. Zu diesem Zweck wird in Schritt C eine vom Benutzer vorzunehmende Einstellung abgefragt, ob die Verschlüsselung gerätespezifisch sein soll oder nicht. Falls eine gerätespezifische Verschlüsselung gewünscht ist, wird in Schritt D2 der zur Verschlüsselung eingesetzte Schlüssel S auf das gesamte Passwort P gesetzt. Ist dagegen keine geräteabhängige Verschlüsselung gewünscht, wird in Schritt D1 nur der geräteunabhängige Teil P_{GUT} des Systempassworts als Schlüssel S übernommen. Als dritte Möglichkeit schließlich bietet D3 die Möglichkeit der Eingabe eines für diesen Verschlüsselungsvorgangs spezifischen Schlüssels S durch den Benutzer, falls dieses weiter oben in Schritt B gewünscht wurde oder kein Passwort P vorhanden ist.

Mit diesem Schlüssel S wird anschließend in Schritt E die Verschlüsselung der Sicherungsdatei SD vorgenommen. Zur Verschlüsselung können alle bekannten symmetrischen Verfahren, zum Beispiel RSA, AES, Twofish, Blowfish usw. eingesetzt werden. Dieses ist aus dem Stand der Technik bekannt und wird hier ebenfalls nicht weiter ausgeführt.

In Schritt F werden der Sicherungsdatei SD noch Informationen über die Verschlüsselung IS hinzugefügt. Diese Informationen IS bieten die Möglichkeit, bei der Entschlüsselung festzustellen, ob ein Schlüssel passt oder nicht. Erreicht werden kann das zum Beispiel, in dem eine eindeutige, aber nicht umkehrbare Repräsentation des Schlüssels S zusammen mit Informationen über den benutzten Schlüsselalgorithmus der Sicherungsdatei SD zugefügt werden. Das Verfahren beendet schließlich nach Schritt G, nachdem die Sicherungsdatei SD auf dem nichtflüchtigen Speichermedium NF abgelegt wurde. Im Allgemeinen wird bei Pocket-PCs als nichtflüchtiges Speichermedium NF eine Solid-State Speicherkarte, zum Beispiel gefertigt in Flash-Technologie, eingesetzt.

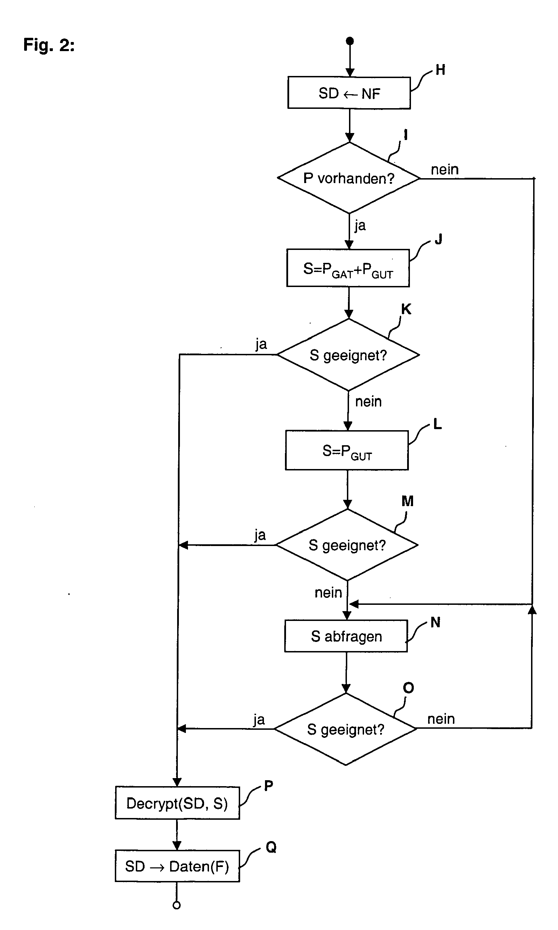

Figur 2 zeigt das Flussdiagramm eines Verfahrens zum Entschlüsseln einer verschlüsselten Sicherungsdatei bei einem Pocket-PC dar. Dieses Verfahren ist das komplementäre Gegenstück zu dem in Zusammenhang mit Figur 1 beschriebenen Verfahren und beginnt dementsprechend in Schritt H mit dem Einlesen der verschlüsselten Sicherungsdatei SD von dem nichtflüchtigen Speichermedium NF.

Im folgenden Schritt I wird analog zu Schritt B aus Figur 1 abgefragt, ob das vereinbarte Passwort P auf dem hier benutzten Gerät überhaupt vorhanden ist. Falls nicht, verzweigt das Verfahren zum später beschriebenen Schritt N.

Falls das vereinbarte Passwort vorhanden ist, wird als Schlüssel zum Entschlüsseln das komplette Passwort P, bestehend aus seinem geräteabhängigen Anteil P_{GAT} und seinem geräteunabhängigen Anteil P_{GUT} gesetzt. In Schritt K erfolgt ein Test, ob der so gesetzte Schlüssel S zur Entschlüsselung der Sicherungsdatei SD geeignet ist. Dieser Test wird durch die Informationen zur Verschlüsselung IS, die in Schritt F aus Figur 1 der Sicherungsdatei hinzugefügt wurden, möglich.

Falls eine Entschlüsselung mit diesem Schlüssel S nicht möglich ist, der Schlüssel also nicht "passt", wird in Schritt L der Schlüssel S auf den geräteunabhängigen Teil P_{GUT} des Passworts P reduziert. In Schritt N erfolgt analog zu Schritt K die Überprüfung, ob ein Entschlüsseln mit diesem Schlüssel S möglich ist. Wenn auch das verneint wird, wird in Schritt N vom Benutzer die Eingabe eines Schlüssels S erwartet. Dieses geschieht auch, wenn in Schritt I festgestellt wurde, dass entweder kein vereinbartes Passwort P vorhanden ist, oder seine Benutzung nicht erwünscht ist.

In Schritt O erfolgt dann auch für den vom Benutzer eingegebenen Schlüssel S die Abfrage, ob dieser zur Entschlüsselung der Schlüsseldatei geeignet ist. Falls nicht, verzweigt das Verfahren wieder zum Schritt N für eine erneute Möglichkeit, den Schlüssel S anzugeben. Darüber hinaus besteht die Möglichkeit, das Verfahren erfolglos zu beenden, was aus Gründen der Übersichtlichkeit hier nicht gezeigt ist.

Falls eine der Abfragen in den Schritten K, N oder O ergeben haben, dass der vorliegende Schlüssel S zur Entschlüsselung der Sicherungsdatei SD geeignet ist, verzweigt das Verfahren zum Schritt P in dem diese Entschlüsselung gemäß des in den Informationen zur Verschlüsselung IS angegebenen Entschlüsselungsverfahrens mit dem Schlüssel S durchgeführt wird. In Schritt Q werden danach schließlich die entschlüsselten Informationen aus der Sicherungsdatei in Umkehrung des Schrittes A aus Figur 1 zurück in den flüchtigen Speicher F geschrieben.

Für den Fall, dass die Sicherungsdatei SD erstellt und ihre Daten auf dem selben Gerät wieder hergestellt wurden, ermöglichen die erfindungsgemäßen Verfahren somit das Ver- und Entschlüsseln einer Sicherungsdatei, ohne dass vom Benutzer die Eingabe eines Schlüssels abverlangt würde. Gleiches gilt auch, wenn die Sicherungsdatei SD zwar auf einem anderen Gerät wieder hergestellt wurde, zur Verschlüsselung jedoch keine gerätespezifischen Teile P_{GAT} des Passworts benutzt wurden und beide Geräte den selben geräteunabhängigen Teil P_{GUT} des Passworts P aufwiesen. Das ermöglicht beispielsweise, Daten beliebig zwischen mehreren Geräten ein und des selben Benutzers auszutauschen.

### Bezugszeichenliste:

- F:: flüchtiger Speicher
- NF:: nichtflüchtiges Speichermedium
- SD:: Sicherungsdatei
- P:: Passwort
- P_{GAT:}: geräteabhängiger Teil des Passworts P
- P_{GUT:}: geräteunabhängiger Teil des Passworts P
- S:: Schlüssel
- IS:: Information über die Verschlüsselung

## Patentansprüche

1. Verfahren zum Erstellen einer verschlüsselten Sicherungsdatei (SD) bei einem Pocket-PC, **dadurch gekennzeichnet, dass** ein im BIOS und/oder Betriebssystem des Pocket-PCs abgelegtes Passwort (P) als Schlüssel (S) zur Verschlüsselung der Sicherungsdatei (SD) eingesetzt wird.

2. Verfahren zum Wiederherstellen von Daten aus einer verschlüsselten Sicherungsdatei (SD) bei einem Pocket-PC, **dadurch gekennzeichnet, dass** als Schlüssel (S) zur Entschlüsselung der Sicherungsdatei (SD) ein im BIOS und/oder Betriebssystem des Pocket-PCs abgelegtes Passwort (P) eingesetzt wird.

3. Verfahren nach einem der Ansprüche 1 oder 2, bei dem das Passwort (P) das Passwort eines Zugangsschutzes des Pocket-PCs ist.

4. Verfahren nach einem der Ansprüche 1 bis 3, bei dem das Passwort (P) einen geräteabhängigen (P_{GAT}) und einem geräteunabhängigen (P_{GUT}) Teil umfasst, wobei zur Ver- bzw. Entschlüsselung nur der geräteunabhängige Teil (P_{GUT}) eingesetzt wird.

5. Verfahren nach einem der Ansprüche 2 bis 4, bei dem der Benutzer zur Eingabe des Schlüssels (S) aufgefordert wird, falls das Passwort (P) oder, wenn vorhanden, der geräteunabhängige Teil (P_{GUT}) des Passwortes (P), zur Entschlüsselung nicht geeignet ist und bei dem daraufhin der vom Benutzer eingegebene Schlüssel (S) zur Entschlüsselung der Sicherungsdatei (SD) eingesetzt wird.

6. Pocket-PC, **dadurch gekennzeichnet, dass** der Pocket-PC dazu eingerichtet ist, eine verschlüsselte Sicherungsdatei (SD) gemäß einem der Verfahren nach einem der Ansprüche 1 oder 2 bis 4 zu erstellen und Daten aus der verschlüsselten Sicherungsdatei gemäß einem der Verfahren nach einem der Ansprüche 2 bis 5 wiederherzustellen.

7. Pocket-PC nach Anspruch 6, bei dem in der verschlüsselten Sicherungsdatei (SD) Daten aus einem flüchtigen Speicher (F) gesichert werden und die Sicherungsdatei (SD) auf einem nichtflüchtigen Speichermedium (NF) abgelegt wird.

8. Computerprogrammprodukt mit Programmcode zur Durchführung eines Verfahrens nach einem der Ansprüche 1 bis 5, wenn das Programm auf einem Pocket-PC abläuft.
